# EUROPEAN PATENT APPLICATION

(11) **EP 4 545 459 A1**
(43) Date of publication of application: **30.04.2025**
(21) Application number: 24178250.7
(22) Date of filing: 27.05.2024
(51) Int. Cl.: B65H 19/18, B65H 23/032, H01M 10/04, H01M 10/0587, B65H 19/10

(54) **SHEET CONNECTION DEVICE AND METHOD FOR SECONDARY BATTERY**

(30) Priority: 26.10.2023 KR 20230144536
(71) Applicant: Samsung SDI Co., Ltd., Yongin-si, Gyeonggi-do 17084 (KR)
(72) Inventor: Ma, Wanjun, Yongin-si, Gyeonggi-do 17084 (KR); Bae, Tae-Hwan, Yongin-si, Gyeonggi-do 17084 (KR)
(74) Representative: Gulde & Partner

(57) **Abstract**

A sheet connection device (100) for a secondary battery is provided. The sheet connection device (100) includes a first main roller (110) around which a first sheet (114) waiting for a subsequent process is wound, a second main roller (120) around which a second sheet (124) being supplied for the subsequent process is wound, a first correction roller (172) winding at least a portion of the first sheet (114) moving from the first main roller (110) for a test run of the subsequent process, a first sensor (132) arranged to detect a position of the first sheet (114) moving from the first main roller (110) to the first correction roller (172), a controller (180) configured to adjust the position of the first sheet (114) in a sheet width direction while the at least the portion of the first sheet (114) is being wound around the first correction roller (172), and a connection unit (150, 160) arranged to connect the repositioned first sheet (114) with the second sheet (124).

## Description

### BACKGROUND

### TECHNICAL FIELD

The present disclosure relates to a sheet connection device and method for a secondary battery that adjusts a position of a waiting sheet while the waiting sheet is wound around a correction roller to connect the waiting sheet with a supplying sheet.

### DESCRIPTION OF THE RELATED ART

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly comprising of a positive electrode and a negative electrode, a case accommodating the same, and electrode terminals connected to the electrode assembly.

Secondary batteries are manufactured through various processes. In particular, to manufacture a main component of the secondary battery such as an electrode assembly, a method involving the continuous conveying and winding of electrode plates and separator sheets has been widely used.

However, when a sheet being supplied to a process is depleted, a new sheet to be supplied may not match (e.g., may be misaligned with) the previously supplied sheet in a sheet width direction when the operator supplies the new sheet to the manufacturing device. If the sheets do not match each other in the sheet width direction, not only is the quality of secondary batteries reduced due to shoulder line defects, but a significant amount of sheets may also be unnecessarily consumed in the process of resolving the mismatch between the sheets, resulting in reduced manufacturing efficiency. Therefore, it is desired to design a sheet connection device to address these issues.

The above information disclosed in this Background section is for enhancement of understanding of the background of the present disclosure, and therefore, it may contain information that does not constitute related (or prior) art.

### SUMMARY

Embodiments of the present disclosure provide a sheet connection device for a secondary battery that avoids or mitigates the above described problems.

However, the technical problem to be solved by the present disclosure is not limited to the above problem, and other problems not mentioned herein, and aspects and features of the present disclosure that would address such problems, will be clearly understood by those skilled in the art from the description of the present disclosure below.

According to one or more embodiments of an aspect of the present disclosure, there is provided a sheet connection device for a secondary battery including: a first main roller around which a first sheet waiting for a subsequent process is wound; a second main roller around which a second sheet being supplied for the subsequent process is wound; a first correction roller winding at least a portion of the first sheet moving from the first main roller for conducting a test run of the subsequent process; a first sensor arranged to detect a position of the first sheet moving from the first main roller to the first correction roller; a controller configured to adjust the position of the first sheet in a sheet width direction while the at least the portion of the first sheet is being wound around the first correction roller; and a connection unit arranged to connect the repositioned first sheet with the second sheet.

The controller may adjust the position of the first sheet by moving, in the sheet width direction, a first spool on which the first main roller may be mounted.

The sheet connection device described above may further include a first buffer roller arranged to adjust tension of the first sheet while the position of the first spool may be adjusted.

The connection unit may include a first connection unit and a second connection unit arranged to be spaced apart from each other such that the first sheet the second sheet may be disposed therebetween to face each other.

Each of the first connection unit and the second connection unit may include an adsorption member and an adhesive member.

Each of the first connection unit and the second connection unit may include: a fixed member; and a rotating member having a first rotational shaft and a second rotational shaft at both ends thereof. The rotating member may be rotatably connected with the fixed member via the first rotational shaft, and the rotating member may be rotatably connected with the adsorption member via the second rotational shaft.

The adsorption member may include an adsorption surface and an adhesion surface on which the adhesive member is adhered, and the adsorption surface and the adhesion surface may be arranged (e.g., may face) in opposite directions about the second rotational shaft.

At least one of the first connection unit or the second connection unit may further include a cutting member for cutting the first sheet and the second sheet simultaneously (or concurrently).

A cutting line of the first sheet and a cutting line of the second sheet may be parallel to each other, the adsorption member of the first connection unit may adsorb the first sheet during a process in which the first sheet is cut, and the adsorption member of the second connection unit may adsorb the second sheet during a process in which the second sheet is cut.

The adhesive member of the second connection unit may connect a cut surface of the first sheet with a cut surface of the second sheet.

According to one or more embodiments of another aspect of the present disclosure, there is provided a sheet connection method including: performing a test run of winding a first sheet waiting for a subsequent process moving from a first main roller around a correction roller; detecting, by a sensor, a position of the first sheet moving from the first main roller to the correction roller; adjusting, by a controller, the position of the first sheet in a sheet width direction while at least a portion of the first sheet is being wound around the correction roller; and connecting, by a connection unit, the first sheet whose position is adjusted with a second sheet being supplied from a second main roller to the subsequent process.

The connection unit may include a first connection unit and a second connection unit arranged to be spaced apart from each other such that the first sheet the second sheet may be disposed therebetween to face each other. The connecting of the first sheet with the second sheet may include adsorbing a portion of the first sheet by an adsorption member of the first connection unit, and adsorbing a portion of the second sheet by an adsorption member of the second connection unit.

The sheet connection method may include contacting the portion of the first sheet with the portion of the second sheet by moving the adsorption member of the first connection unit and the adsorption member of the second connection unit closer to each other.

In the connecting of the first sheet with the second sheet, the first sheet and the second sheet may be cut simultaneously by a cutting member of the connection unit.

A cutting direction of the first sheet and the second sheet may correspond to a direction perpendicular to a contact surface between the first sheet and the second sheet.

The connecting of the first sheet with the second sheet may further include collecting, after the first sheet and the second sheet are cut out, a portion of the cut first sheet that is connected to the correction roller through the correction roller.

The connecting of the first sheet with the second sheet may further include adsorbing a portion of the cut first sheet and a portion of the cut second sheet together by the adsorption member of the first connection unit; and connecting a cut surface of the first sheet with a cut surface of the second sheet by moving an adhesive member of the second connection unit towards the adsorption member of the first connection unit.

The first sheet may be supplied to the subsequent process after the first sheet and the second sheet are connected.

The sheet connection method may further include arranging a third sheet waiting for the subsequent process around the second main roller; and connecting the third sheet with the first sheet.

The connecting the third sheet with the first sheet may include, connecting the third sheet whose position is adjusted, with the first sheet being supplied from the first main roller to the subsequent process by the connection unit.

In some embodiments of the present disclosure, the misalignment between the sheet in standby and the sheet being supplied is resolved by conducting a test run of a subsequent process. Therefore, it is possible to prevent the deterioration of the quality of secondary batteries due to shoulder line defects.

In some embodiments of the present disclosure, by adjusting the position of the sheet in the sheet width direction while winding a portion of the sheet using the correction roller, the misalignment between sheets can be resolved with a small amount of sheet consumption, thereby increasing the manufacturing efficiency.

However, aspects and features of the present disclosure are not limited to those described above, and other aspects and features not mentioned will be clearly understood by a person skilled in the art from the detailed description, described below.

All embodiments described in this specification may be advantageously combined with one another to the extent that their respective features are compatible. In particular, the expressions "according to an embodiment," "in an embodiment," "an embodiment of the invention provides" etc. mean that the respective features may or may not be part of specific embodiments of the present invention.

### BRIEF DESCRIPTION OF THE DRAWINGS

The following drawings attached to this specification illustrate embodiments of the present disclosure and further describe aspects and features of the present disclosure together with the detailed description of the present disclosure. Thus, the present disclosure should not be construed as being limited to the drawings:
FIG. 1 is a diagram showing a cross-sectional view of a sheet connection device for a secondary battery according to one embodiment of the present disclosure.
FIG. 2 is a diagram illustrating an example in which a position of a first sheet is adjusted in a sheet width direction according to one embodiment of the present disclosure.
FIG. 3 is a diagram schematically illustrating a subsequent process of a sheet connection process according to one embodiment of the present disclosure.
FIG. 4 is a diagram illustrating a configuration of a connection unit in the sheet connection device according to one embodiment of the present disclosure.
FIG. 5 is a diagram illustrating a first operation to a fifth operation for connecting sheets for a secondary battery to each other according to one embodiment of the present disclosure.
FIG. 6 is a diagram illustrating a sixth to an eighth operation for connecting the sheets for the secondary battery to each other according to one embodiment of the present disclosure.
FIG. 7 is a diagram illustrating a ninth to a twelfth operation for connecting the sheets for the secondary battery to each other according to one embodiment of the present disclosure.
FIG. 8 is a flowchart illustrating a sheet connection method for the secondary battery according to one embodiment of the present disclosure.
FIG. 9 is a flowchart illustrating a sheet connection method using a connection unit according to one embodiment of the present disclosure.

### DETAILED DESCRIPTION

Hereinafter, embodiments of the present disclosure will be described, in detail, with reference to the accompanying drawings. The terms or words used in the present specification and claims are not to be limitedly (or restrictively) interpreted in view of their general or dictionary meanings but should be interpreted as having meanings and embodying concepts that are consistent with the technical idea of the present disclosure on the basis of the principle that an inventor can be his/her own lexicographer to appropriately define concepts of terms to describe his/her invention in the best way.

The embodiments described in this specification and the configurations shown in the drawings are only some of the embodiments of the present disclosure and do not represent all of the technical aspects and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (e.g., rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would comply with the requirements of 35 U.S.C. § 112(a) and 35 U.S.C. § 132(a).

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

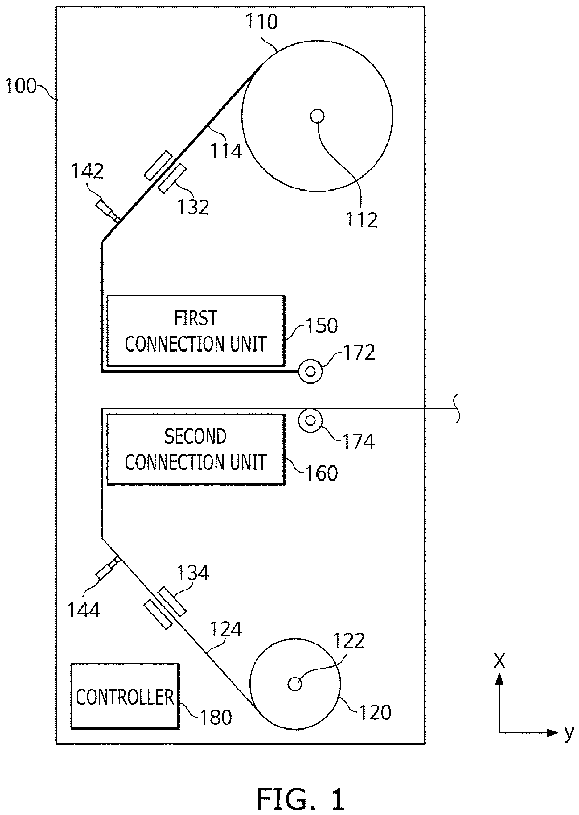

FIG. 1 is a diagram showing a cross-sectional view of a sheet connection device 100 for a secondary battery according to one embodiment of the present disclosure. Referring to FIG. 1, the sheet connection device 100 may include main rollers 110 and 120, spools 112 and 122, sensors 132 and 134, buffer rollers 142 and 144, connection units 150 and 160, and correction rollers 172 and 174. However, without being limited thereto, the sheet connection device 100 may further include other components, or some components of the sheet connection device 100 may be omitted.

In the sheet connection device 100, components corresponding to each other may be configured to perform the same role (e.g., the same function). For example, the first main roller 110 may have the same role as the second main roller 120; the first spool 112 may have the same role as the second spool 122; the first sensor 132 may have the same role as the second sensor 134; the first buffer roller 142 may have the same role as the second buffer roller 144; the first connection unit 150 may have the same role as the second connection unit 160; and the first correction roller 172 may have the same role as the second correction roller 174. One of the components corresponding to each other may be selectively deactivated or unused depending on locations of a sheet waiting for a subsequent process and a sheet being supplied for the subsequent process. For example, in FIG. 1, in a case where a first sheet 114 waiting for a subsequent process is wound around the first main roller 110, the second sensor 134 and the second correction roller 174 may not be used.

The main rollers 110 and 120 may be mounted on the spools 112 and 122, and the sheets 114 and 124 may be wound around the main rollers 110 and 120, respectively. Each of the sheets 114 and 124 may correspond to a sheet such as, but not limited to, an electrode plate (e.g., an anode plate or a cathode plate) or a separator used in the manufacture of secondary batteries (e.g., in the manufacture of electrode assemblies for secondary batteries). Further, the sheet connection device 100 may be used not only for sheets used to manufacture secondary batteries, but also for sheets of any type or purpose.

The first sheet 114 waiting for a subsequent process may be wound around the first main roller 110 that is mounted on the first spool 112, and the second sheet 124 being supplied for the subsequent process may be wound around the second main roller 120 mounted on the second spool 122. Without being limited thereto, the positional relationship between the waiting sheet and the supplying sheet may be changed periodically depending on the manufacturing process. For example, in a case where the second sheet 124 being supplied is fully used, the first sheet 114 may be available for a subsequent process. In this case, a third sheet that is prepared to wait for the subsequent process may be wound around the second main roller 120.

The connection units 150 and 160 may connect the first sheet 114 and the second sheet 124. The first connection unit 150 and the second connection unit 160 may be arranged to be spaced apart from each other such that the first sheet 114 and the second sheet 124 are disposed therebetween to face each other.

Before the second sheet 124 is fully used, an operator (or the sheet connection device 100 and some components of the sheet connection device 100) may attach or adsorb at least a portion of the first sheet 114 to the first connection unit 150 to allow the first and second connection units 150 and 160 to perform a connection operation between the first sheet 114 and the second sheet 124. In this connection, in a case where a position of the first sheet 114 attached or adsorbed by the operator in a sheet width direction does not match a position of the second sheet 124 in the sheet width direction, a misalignment between the sheets may occur in the sheet width direction (e.g., the z-axis direction) when the first sheet 114 and the second sheet 124 are connected, resulting in a deterioration in the quality of the secondary battery due to shoulder line defects. Therefore, before the first sheet 114 and the second sheet 124 are connected, the position of the first sheet 114 in the sheet width direction should be aligned in advance so that the position of the first sheet 114 matches the position of the second sheet 124 in the sheet width direction.

To this end, a test run of the subsequent process is conducted and, in the test run, the first correction roller 172 may be used to wind at least a portion of the first sheet 114 moving from the first main roller 110, and a controller 180 may adjust the position of the first sheet 114 in the sheet width direction while at least the portion of the first sheet 114 is being wound around the first correction roller 172. In one embodiment, the controller 180 may adjust the position of the first sheet 114 by moving, in the sheet width direction, the first spool 112 on which the first main roller 110 is circumferentially mounted.

In one embodiment, the first sensor 132 may detect the position of the first sheet 114 moving from the first main roller 110 to the first correction roller 172, and the controller 180 may adjust the position of the first sheet 114 based on the position of the first sheet 114 detected by the first sensor 132. For example, information associated with the normal position of the first sheet 114 may be stored in advance in the controller 180, and the position of the first sheet 114 may be adjusted based on (or according to) the pre-stored positional information of the normal position and the positional information of the first sheet 114 detected from the first sensor 132.

The first buffer roller 142 may measure and adjust tension of the first sheet 114 while the position of the first spool 112 is being adjusted. For example, in a case where high tension is applied to the first sheet 114 during the position adjustment process of the first spool 112, the first buffer roller 142 may rotate in a direction in which the tension on the first sheet 114 is relieved to reduce the tension applied to the first sheet 114. On the other hand, in a case where low tension is applied to the first sheet 114, the first buffer roller 142 may rotate in a direction that increases the tension applied to the first sheet 114. Similar to the first buffer roller 142, the second buffer roller 144 may measure and adjust tension of the second sheet 124 while the second sheet 124 is being supplied for the subsequent process. The driving direction and/or torque of the buffer rollers 142 and 144 may be determined based on the measured tension value.

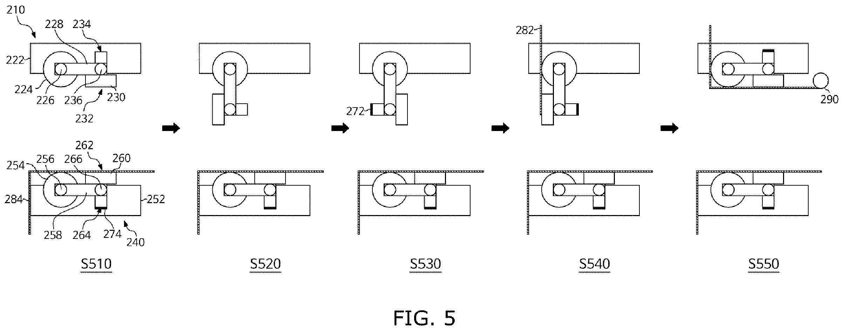

After the position of the first sheet 114 is adjusted, the connection units 150 and 160 may connect the repositioned first sheet 114 with the second sheet 124. The process through which the connection units 150 and 160 connect the first sheet 114 and the second sheet 124 to each other will be described in detail with reference to FIGS. 5 to 7.

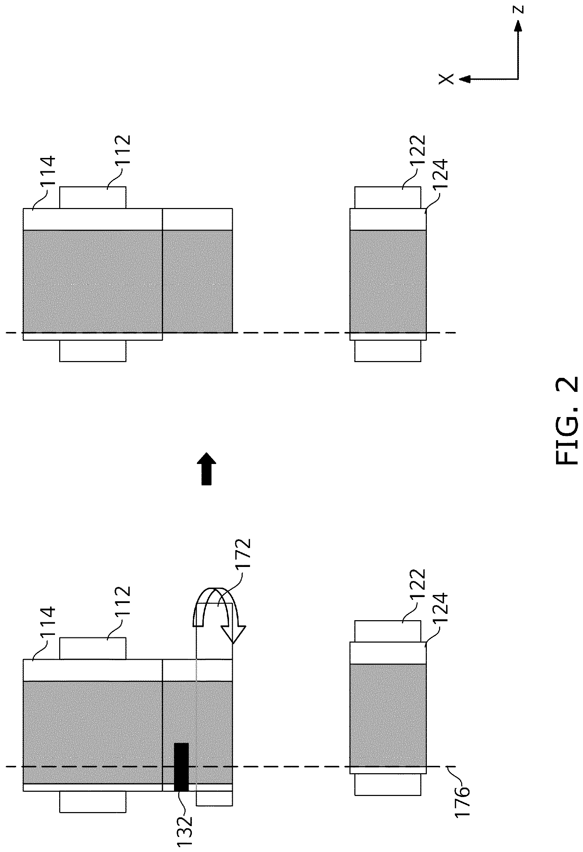

FIG. 2 is a diagram illustrating an example in which the position of the first sheet 114 is adjusted in the sheet width direction according to one embodiment of the present disclosure. Each component in FIG. 2 may correspond to a component in FIG. 1 having the same reference numeral.

In order to replace the sheet used during the secondary battery manufacturing process from the second sheet 124 to the first sheet 114, an operator may adsorb or attach the first sheet 114 to the connection unit by aligning the first sheet 114 with a reference line 176. In this case, the reference line 176 may indicate the normal position of the first sheet 114 at which the misalignment between the first sheet 114 and the second sheet 124 does not occur in the sheet width direction (e.g., the z-axis direction). For example, the reference line 176 may indicate the normal position at where a boundary line of an uncoated portion of the first sheet 114, at where active materials are not applied, is located. In one embodiment, the reference line 176 may be indicated with laser light.

However, as shown in FIG. 2, in a case where the first sheet 114 is adsorbed or attached beyond (or extends beyond) the reference line 176, the positions of the first sheet 114 and the second sheet 124 are desired to be aligned to match each other in the sheet width direction before the first sheet 114 and the second sheet 124 are connected to each other.

To this end, while at least the portion of the first sheet 114 is wound around the first correction roller 172 for conducting the test run of the subsequent process, the position of the first sheet 114 may be adjusted in the sheet width direction by the controller 180. For example, in FIG. 2, it is illustrated that the first sheet 114 is positioned to the left of the normal position in the sheet width direction. Therefore, the position of the first sheet 114 may be adjusted to be moved to the right (e.g., the +z direction) in the sheet width direction. The position of the first sheet 114 may be adjusted based on the position of the first sheet 114 detected by the first sensor 132. Accordingly, the reference line 176 between the coated portion (indicated by shading) and uncoated portion of the first sheet 114 may be aligned with a boundary line between the coated portion(indicated by shading) and uncoated portion of the second sheet 124.

In one embodiment, the position of the first sheet 114 may be adjusted by moving the first spool 112 in the sheet width direction. Additionally, the buffer roller may adjust the tension of the first sheet 114 while the position of the first spool 112 is adjusted.

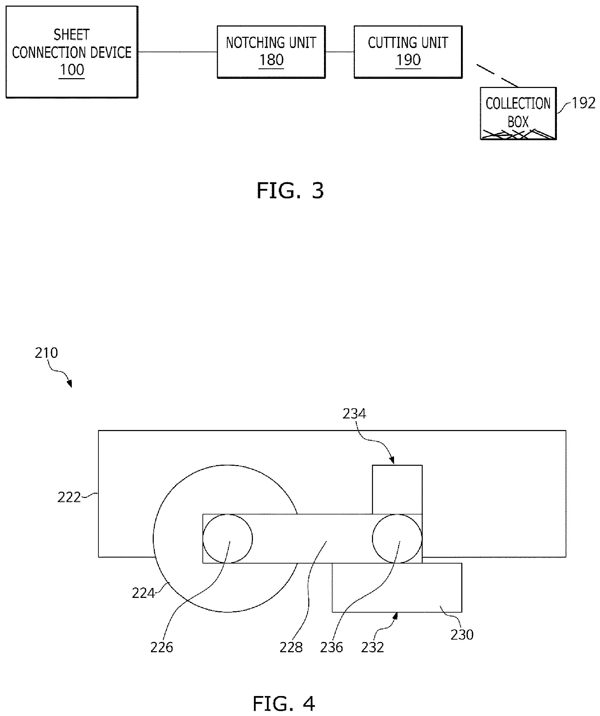

FIG. 3 is a diagram schematically illustrating a subsequent process of a sheet connection process according to one embodiment of the present disclosure. In one embodiment, a notching process and a cutting process may be performed at a notching unit 180 and a cutting unit 190, respectively, to a sheet that is transferred from the sheet connection device 100 to the outside of the sheet connection device 100.

In a case where two sheets are connected to each other according to one embodiment of the present disclosure in the sheet connection device 100, the notching process may be omitted for a part of a sheet including a portion where the two sheets are connected, and the part of the sheet may be cut in the cutting process and then collected in a collection box 192. Therefore, it is possible to prevent the secondary battery manufacturing device from being damaged by an adhesive member used when connecting the sheets.

FIG. 4 is a diagram illustrating a configuration of a connection unit 210 in the sheet connection device according to one embodiment of the present disclosure. The connection unit 210 shown in FIG. 4 may have the same configuration as a first connection unit 210 and a second connection unit 240 shown in FIGS. 5 to 7.

The connection unit 210 may include a fixed member 222, a roller 224, a rotating member 228, and an adsorption member 230. The roller 224 may be fixed to the fixed member 222 via a first rotational shaft 226, and the roller 224 may rotate about the first rotational shaft 226 to facilitate the smooth transfer of the sheet.

The rotating member 228 may have the first rotational shaft 226 and a second rotational shaft 236 at both ends (e.g., opposite ends) thereof. The rotating member 228 may be rotatably connected with the fixed member 222 via the first rotational shaft 226 and rotatably connected with the adsorption member 230 via the second rotational shaft 236.

The adsorption member 230 may have a T-shape. The adsorption member 230 may have an adsorption surface 232 on which a sheet is adsorbed and an adhesion surface 234 on which an adhesive member is provided to connect sheets to each other. The rotational positions of the adsorption surface 232 and the adhesive surface 234 may be adjusted by rotating the adsorption member 230 about the second rotational shaft 236. The adsorption surface 232 and the adhesive surface 234 may be arranged in opposite directions about the second rotational shaft 236 (e.g., 180 degrees apart from each other), but are not limited thereto. For example, the adsorption surface 232 and the adhesion surface 234 may be arranged to be 90 degrees apart from each other about the second rotational shaft 236.

The connection unit 210 shown in FIG. 4 is merely an example and the present disclosure is not limited thereto. For example, the connection unit 210 may further include other components for connecting sheets, or may not include some components.

FIG. 5 is a diagram illustrating a first operation to a fifth operation for connecting sheets for a secondary battery to each other according to one embodiment of the present disclosure. The first to fifth operations may be performed during the test run and the positioning process. The first connection unit 210 and the second connection unit 240 may be used to connect sheets for the secondary battery. The first connection unit 210 may include a first fixed member 222, a first roller 224, a first rotational shaft 226, a first rotating member 228, a first adsorption member 230 having a first adsorption surface 232 and a first adhesive surface 234, and a second rotational shaft 236. Similarly, the second connection unit 240 may include a second fixed member 252, a second roller 254, a third rotational shaft 256, a second rotating member 258, a second adsorption member 260 having a second adsorption surface 262 and a second adhesive surface 264, and a fourth rotational shaft 266. For each component of the first connection unit 210 and the second connection unit 240 that has the same configuration and the same function as that described above with respect to FIG. 4, the description thereof will be omitted, and the same reference numerals are utilized to describe specific operations of the sheet connection device in FIGS. 5 to 7.

In the first operation S510, a second sheet 284 may be transferred to the outside of the sheet connection device for a subsequent process. For example, the second sheet 284 may be introduced into an electrode assembly manufacturing process through the notching unit 180 and the cutting unit 190 shown in FIG. 3. In the first operation S510, the second adsorption member 260 may not adsorb the second sheet 284. While the second sheet 284 is being transferred to the outside of the sheet connection device during the first operation S510, the second roller 254 may rotate about the third rotational shaft 256 to facilitate the transfer of the second sheet 284.

In the second operation S520, the first rotating member 228 may rotate clockwise (based on FIG. 5) about the first rotational shaft 226 and, in the third operation S530, the first adsorption member 230 may rotate about the second rotational shaft 236 such that the first adhesive surface 234 of the first adsorption member 230 faces the operator operating the sheet connection device. By having the first adhesive surface 234 facing towards the operator, the operator may attach a first adhesive member 272 to the first adhesive surface 234.

The first adhesive member 272 may not be used in the operations described in FIGS. 5 to 7, but may be used later in a process of connecting a first sheet 282 to another sheet to be replaced after the use of the first sheet 282 is completed in the secondary battery manufacturing process. Similarly, a second adhesive member 274 may be previously attached during a process of replacing a sheet used in the secondary battery manufacturing process with the second sheet 284. In other words, the second adhesive member 274 may be attached prior to the operation S510.

In the fourth operation S540, the first adsorption member 230 may be rotated about the second rotational shaft 236 such that the first adsorption surface 232 of the first adsorption member 230 faces the operator. The operator may position a portion of the first sheet 282 onto the first adsorption surface 232 of the first adsorption member 230 such that the first adsorption member 230 adsorbs the portion of the first sheet 282. During the fourth operation S540, the reference line indicating the normal position of the first sheet 282 may be displayed by laser light or the like, allowing the operator to align the first sheet 282 based on the reference line and position the portion of the first sheet 282 onto the first adsorption member 230.

In the fifth operation S550, the first rotating member 228 may rotate counterclockwise (based on FIG. 5) about the first rotational shaft 226 while the first adsorption member 230 adsorbs the portion of the first sheet 282. The first sheet 282 may be transferred to a correction roller 290, and at least a portion of the first sheet 282 is wound around the correction roller 290 for conducting the test run of the subsequent process. During this operation, the position of the first sheet 282 may be detected by a sensor while at least the portion of the first sheet 282 is being wound around the correction roller 290. Based on the detected position of the first sheet 282, the position of the first sheet 282 may be adjusted in the sheet width direction to move the first sheet 282 to the normal position (see, e.g., FIG. 2). Through the fifth operation S550, the misalignment between the first sheet 282 and the second sheet 284 in the sheet width direction may be resolved or corrected.

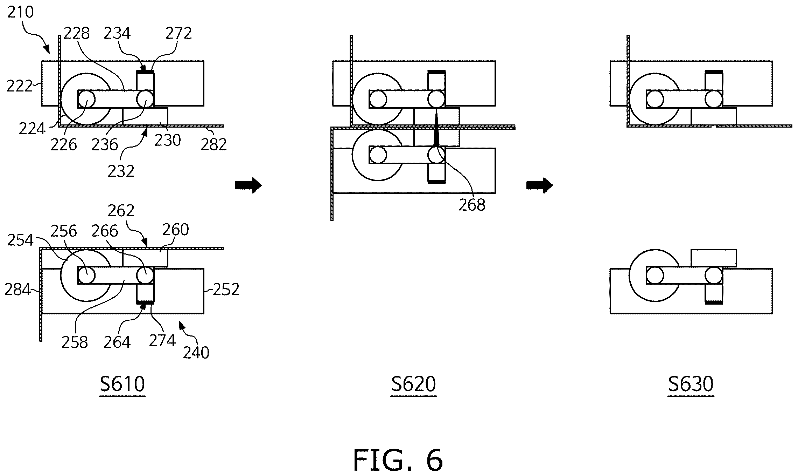

FIG. 6 is a diagram illustrating a sixth to an eighth operation for connecting the sheets for the secondary battery to each other according to one embodiment of the present disclosure. The sixth to eighth operations may be performed in a process of cutting the sheets. After the position of the first sheet 282 is adjusted in the sheet width direction in the fifth operation S550 shown in FIG. 5, at least a portion of the second sheet 284 may be adsorbed onto the second adsorption surface 262 of the second adsorption member 260 in the sixth operation S610 shown in FIG. 6. At this time, the transfer of the second sheet 284 to the outside of the sheet connection device may be interrupted.

In the seventh operation S620, the adsorption member 230 of the first connection unit 210 and the adsorption member 260 of the second connection unit 240 may approach each other such that the portion of the first sheet 282 and the portion of the second sheet 284 may come into contact with each other. For example, one of the first connection unit 210 and the second connection unit 240 may move toward the other one of the first connection unit 210 and the second connection unit 240 or the first connection unit 210 and the second connection unit 240 may move toward each other so that the portion of the first sheet 282 and the portion of the second sheet 284 come into contact with each other.

At least one of the first connection unit 210 or the second connection unit 240 may further include a cutting member 268. In the seventh operation S620, the cutting member 268 may cut the first sheet 282 and the second sheet 284 at the same time. The cutting direction of the first sheet 282 and the second sheet 284 may be perpendicular to the contact surface between the first sheet 282 and the second sheet 284. Additionally, the cutting direction of the first sheet 282 and the second sheet 284 may be parallel to the width direction of the first sheet 282 and the second sheet 284. After the first sheet 282 and the second sheet 284 are cut, a portion of the cut first sheet 282 that is connected to the correction roller 290 may be wound through the correction roller 290 and collected later by the operator.

In the eighth operation S630, the adsorption member 230 of the first connection unit 210 may adsorb a portion of the cut first sheet 282 and a portion of the cut second sheet 284 together. As shown in FIG. 6, the cutting line of the first sheet 282 and the cutting line of the second sheet 284 may be parallel to each other.

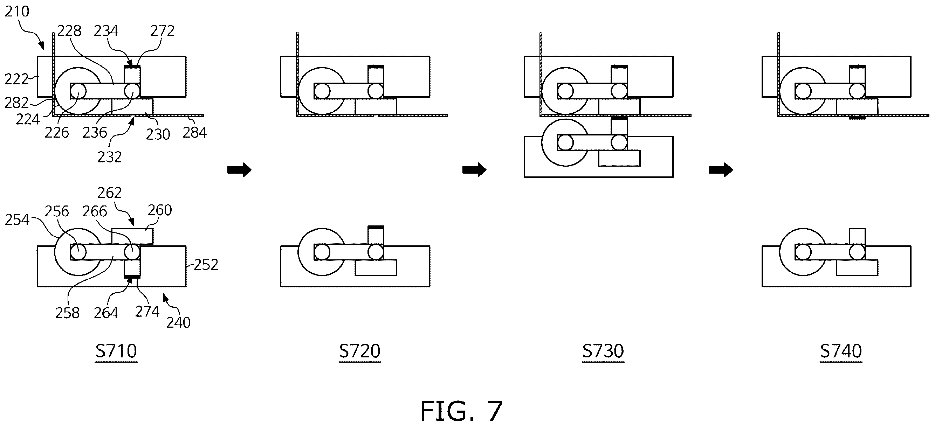

FIG. 7 is a diagram illustrating a ninth to a twelfth operations for connecting the sheets for the secondary battery to each other according to one embodiment of the present disclosure. The ninth to twelfth operations may be performed during a process of joining the sheets.

The ninth operation S710 corresponds to the eighth operation S630 shown in FIG. 6. In the ninth operation S710, the adsorption member 230 of the first connection unit 210 may adsorb one end portion of the first sheet 282 that excludes the portion collected through the correction roller 290 and one end portion of the second sheet 284 continuously connected to the portion of the second sheet 284 that is in use.

In the tenth operation S720, the second adsorption member 260 may be rotated about the fourth rotational shaft 266 such that the second adhesive surface 264 faces one end portion of the first sheet 282 and one end portion of the second sheet 284. The second adhesive member 274 may be previously provided on the second adhesive surface 264. For example, adhesive material may be applied to both sides of the second adhesive member 274 such that the second adhesive member 274 may be adhered to the second adhesive surface 264. In this case, an adhesive material applied to the opposite side of the second adhesive member 274 may be configured to have an adhesive force stronger than an adhesive material applied to the side that is adhered to the second adhesive surface 264. This allows the second adhesive member 274 to be easily separated from the second adhesive surface 264 when the second adhesive member 274 contacts the sheet (e.g., the first sheet 284).

In the eleventh operation S730, one of the first connection unit 210 and the second connection unit 240 may move toward the other one of the first connection unit 210 and the second connection unit 240 or the first connection unit 210 and the second connection unit 240 may move toward each other such that one end portion of the first sheet 282 and one end portion of the second sheet 284 are adhered together with the second adhesive member 274 provided on the second adhesive surface 264. By approaching the adsorption member 230 of the first connection unit 210, the second adhesive member 274 may connect the cut surface of the first sheet 282 with the cut surface of the second sheet 284. In other words, the second adhesive member 274 allows one end portion of the first sheet 282 and one end portion of the second sheet 284 adsorbed on the first adsorption member 230 to be connected to each other.

In the twelfth operation S740, the first connection unit 210 and/or the second connection unit 240 may move back to (e.g., may return to) their original positions, thereby finishing the sheet connection process. After the first sheet 282 and the second sheet 284 are connected, the first sheet 282 may be supplied for the subsequent process. At this time, the portion of the sheet to which the second adhesive member 274 is attached may be cut and collected without being introduced into the notching process or the like during the subsequent process.

Each of the operations shown and described in FIGS. 5 to 7 is merely an example and may be implemented differently in other embodiments. For example, one or more operations may be omitted, or the sequence of the operations may be changed.

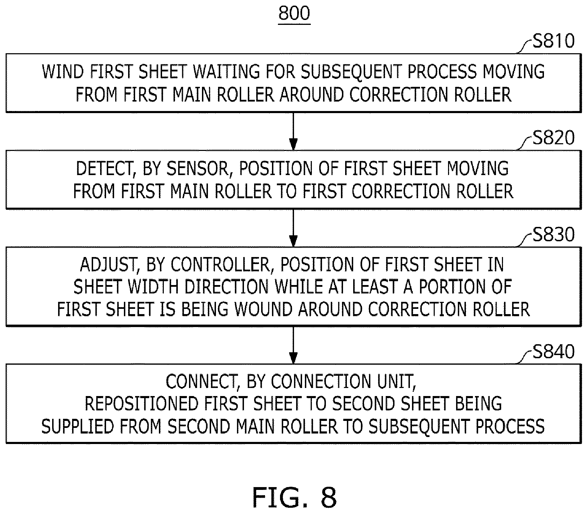

FIG. 8 is a flowchart illustrating a sheet connection method 800 for a secondary battery according to one embodiment of the present disclosure. The sheet connection method 800 may be performed by the sheet connection device described above.

The sheet connection method 800 may be initiated in response to a case where the first sheet waiting for a subsequent process moving from the first main roller is wound around the correction roller (S810).

Next, a position of the first sheet moving from the first main roller to the first correction roller may detected by a sensor of the sheet connection device (S820).

Then, the controller of the sheet connection device may adjust the position of the first sheet in the sheet width direction while at least a portion of the first sheet is being wound around the correction roller (S830). At this time, the controller may adjust the position of the first sheet by moving, in the sheet width direction, the first spool on which the first main roller is circumferentially mounted. While the position of the first spool is adjusted, the first buffer roller may adjust the tension of the first sheet.

Then, the repositioned first sheet may be connected to the second sheet being supplied from the second main roller to the subsequent process by a connection unit (S840).

After the first sheet and the second sheet are connected, the first sheet can be supplied to the subsequent process. After the first sheet is used, the third sheet waiting for the subsequent process may be placed on the second main roller and wound around the second main roller. Further, the third sheet whose position is adjusted may be connected with the first sheet being supplied from the first main roller to the subsequent process by the connection unit.

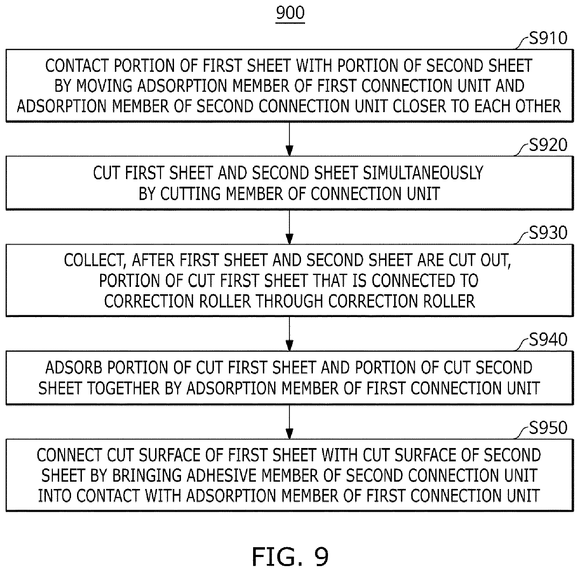

FIG. 9 is a flowchart illustrating a sheet connection method 900 using a connection unit according to one embodiment of the present disclosure. The sheet connection method 900 may describe details of the operation S840 shown in FIG. 8. The sheet connection method 900 may be performed by the sheet connection device (or the connection unit of the sheet connection device) described above. The connection unit of the sheet connection device may include the first connection unit and the second connection unit arranged to be spaced apart from each other with the first sheet and the second sheet facing each other interposed therebetween. Each of the first connection unit and the second connection unit may include the fixed member and the rotating member having the first rotational shaft and the second rotational shaft at both ends thereof. The rotating member is rotatably connected with the fixed member via the first rotational shaft, and the rotating member is also rotatably connected with the adsorption member via the second rotational shaft.

The sheet connection method 900 may be initiated by bringing the adsorption member of the first connection unit and the adsorption member of the second connection unit into contact with each other, such that a portion of the first sheet and a portion of the second sheet come into contact with each other (S910).

Then, the cutting member of the connection unit may cut the first sheet and the second sheet simultaneously (S920). In this case, the cutting direction of the first sheet and the second sheet may correspond to a direction perpendicular to the contact surface between the first sheet and the second sheet, and the cutting line of the first sheet and the cutting line of the second sheet may be parallel to each other. Additionally, the cutting direction of the first sheet and the second sheet may be parallel to the width direction of the first sheet and the second sheet.

After the first sheet and the second sheet are cut (e.g., cut out or removed), a portion of the cut first sheet that is connected to the correction roller may be collected through the correction roller (S930).

Thereafter, the adsorption member of the first connection unit may adsorb a portion of the cut first sheet and a portion of the cut second sheet together (S940).

Next, the adhesive member of the second connection unit approaches the adsorption member of the first connection unit, and the cut surface of the first sheet and the cut surface of the second sheet may be connected to each other (S950).

The flowcharts and the description provided in FIGS. 8 and 9 are merely examples and may be implemented differently in some embodiments. For example, one or more operations may be omitted, the sequence of operations may be changed, one or more operations may be performed in a nested fashion, or one or more operations may be performed multiple times.

Although the present disclosure has been described with reference to embodiments and drawings illustrating aspects thereof, the present disclosure is not limited thereto. Various modifications and variations can be made by a person skilled in the art to which the present disclosure belongs within the technical scope of the present disclosure as defined by the appended claims and their equivalents.

## Claims

1. A sheet connection device (100) for a secondary battery comprising:
a first main roller (110) around which a first sheet (114) is wound;
a second main roller (120) around which a second sheet (124) is wound;
a first correction roller (172) configured to wind at least a portion of the first sheet (114) moving from the first main roller (110);
a first sensor (132) configured to detect a position of the first sheet (114) moving from the first main roller (110) to the first correction roller (172);
a controller (180) configured to adjust the position of the first sheet (114) in a sheet width direction while the at least the portion of the first sheet (114) is being wound around the first correction roller (172); and
a connection unit (150, 160) configured to connect the repositioned first sheet (114) with the second sheet (124).

2. The sheet connection device (100) as claimed in claim 1, further comprising:
a first spool (112) on which the first main roller (110) is mounted; and
a first buffer roller (142),
wherein the controller (180) is configured to adjust the position of the first sheet (114) by moving, in the sheet width direction, the first spool (112), and
the first buffer roller (142) is configured to adjust tension of the first sheet (114) while the position of the first spool (112) is being adjusted.

3. The sheet connection device (100) as claimed in claim 1 or 2, wherein the connection unit (150, 160) comprises a first connection unit (150) and a second connection unit (160) spaced apart from each other such that the first sheet (114) and the second sheet (124) are arranged therebetween and face each other, and
each of the first connection unit (150) and the second connection unit (160) comprises an adsorption member (230, 260) and an adhesive member (272, 274).

4. The sheet connection device (100) as claimed in claim 3, wherein each of the first connection unit (150) and the second connection unit (160) comprises:
a fixed member (222, 252); and
a rotating member (228, 258) having a first rotational shaft (226, 256) and a second rotational shaft (236, 266) at opposite ends thereof,
wherein the rotating member (228, 258) is rotatably connected with the fixed member (222, 252) via the first rotational shaft (226, 256), and
wherein the rotating member (228, 258) is rotatably connected with the adsorption member (230, 260) via the second rotational shaft (236, 266).

5. The sheet connection device (100) as claimed in claim 3 or 4, wherein at least one of the first connection unit (150) or the second connection unit (160) further comprises a cutting member (268) for concurrently cutting the first sheet (114) and the second sheet (124).

6. The sheet connection device (100) as claimed in claim 5, wherein a cutting line of the first sheet (114) and a cutting line of the second sheet (124) are parallel to each other,
wherein the adsorption member (230) of the first connection unit (150) is configured to adsorb the first sheet (114) during a process in which the first sheet (114) is cut, and
wherein the adsorption member (260) of the second connection unit (160) is configured to adsorb the second sheet (124) during a process in which the second sheet (124) is cut.

7. The sheet connection device (100) as claimed in claim 5 or 6, wherein the adhesive member (274) of the second connection unit (160) connects a cut surface of the first sheet (114) with a cut surface of the second sheet (124).

8. A sheet connection method comprising:
performing a test run of winding a first sheet (114) waiting for a subsequent process moving from a first main roller (110) around a correction roller (172);
detecting, by a sensor (132), a position of the first sheet (114) moving from the first main roller (110) to the correction roller (172);
adjusting, by a controller (180), the position of the first sheet (114) in a sheet width direction while at least a portion of the first sheet (114) is being wound around the correction roller (172); and
connecting, by a connection unit (150, 160), the first sheet (114), whose position is adjusted, with a second sheet (124) being supplied from a second main roller (120) to the subsequent process.

9. The sheet connection method as claimed in claim 8, wherein the connection unit (150, 160) comprises a first connection unit (150) and a second connection unit (160) spaced apart from each other such that the first sheet (114) and the second sheet (124) are arranged therebetween and face each other, and
wherein the connecting the first sheet (114) with the second sheet (124) comprises:
adsorbing a portion of the first sheet (114) by an adsorption member (230) of the first connection unit (150), and
adsorbing a portion of the second sheet (124) by an adsorption member (260) of the second connection unit (160).

10. The sheet connection method as claimed in claim 9, further comprising:
contacting the portion of the first sheet (114) with the portion of the second sheet (124) by moving the adsorption member (230) of the first connection unit (150) and the adsorption member (260) of the second connection unit (160) closer to each other.

11. The sheet connection method as claimed in claim 9 or 10, wherein, in the connecting the first sheet (114) with the second sheet (124), the first sheet (114) and the second sheet (124) are concurrently cut by a cutting member (268) of the connection unit (150, 160), and
a cutting direction of the first sheet (114) and the second sheet (124) corresponds to a direction perpendicular to a contact surface between the first sheet (114) and the second sheet (124).

12. The sheet connection method as claimed in claim 11, wherein the connecting the first sheet (114) with the second sheet (124) is further comprising:
collecting, after the first sheet (114) and the second sheet (124) are cut out, a portion of the cut first sheet (114) that is connected to the correction roller (172) through the correction roller (172).

13. The sheet connection method as claimed in claim 12, wherein the connecting the first sheet (114) with the second sheet (124) is further comprising:
adsorbing a portion of the cut first sheet (114) and a portion of the cut second sheet (124) together by the adsorption member (230) of the first connection unit (150); and
connecting a cut surface of the first sheet (114) with a cut surface of the second sheet (124) by moving an adhesive member (274) of the second connection unit (160) towards the adsorption member (230) of the first connection unit (150).

14. The sheet connection method as claimed in any one of claims 8 to 13, wherein the first sheet (114) is supplied to the subsequent process after the first sheet (114) and the second sheet (124) are connected.

15. The sheet connection method as claimed in any one of claims 8 to 14, further comprising:
arranging a third sheet waiting for the subsequent process around the second main roller (120); and
connecting the third sheet, whose position is adjusted, with the first sheet (114) being supplied from the first main roller (110) to the subsequent process by the connection unit (150, 160).

## Amended claims

### Amended claims in accordance with Rule 137(2) EPC.

1. A sheet connection device (100) for a secondary battery comprising:
a first main roller (110) around which a first sheet (114) is wound;
a second main roller (120) around which a second sheet (124) is wound;
a first correction roller (172) configured to wind at least a portion of the first sheet (114) moving from the first main roller (110);
a first sensor (132) configured to detect a position of the first sheet (114) moving from the first main roller (110) to the first correction roller (172);
a controller (180) configured to adjust the position of the first sheet (114) in a sheet width direction while the at least the portion of the first sheet (114) is being wound around the first correction roller (172);
a connection unit (150, 160) configured to connect the repositioned first sheet (114) with the second sheet (124); and
a first buffer roller (142) configured to adjust tension of the first sheet (114) while the position of the first spool (112) is being adjusted.

2. The sheet connection device (100) as claimed in claim 1, further comprising a first spool (112) on which the first main roller (110) is mounted, wherein the controller (180) is configured to adjust the position of the first sheet (114) by moving, in the sheet width direction, the first spool (112).

3. The sheet connection device (100) as claimed in claim 1 or 2, wherein the connection unit (150, 160) comprises a first connection unit (150) and a second connection unit (160) spaced apart from each other such that the first sheet (114) and the second sheet (124) are arranged therebetween and face each other, and
each of the first connection unit (150) and the second connection unit (160) comprises an adsorption member (230, 260) and an adhesive member (272, 274).

4. The sheet connection device (100) as claimed in claim 3, wherein each of the first connection unit (150) and the second connection unit (160) comprises:
a fixed member (222, 252); and
a rotating member (228, 258) having a first rotational shaft (226, 256) and a second rotational shaft (236, 266) at opposite ends thereof,
wherein the rotating member (228, 258) is rotatably connected with the fixed member (222, 252) via the first rotational shaft (226, 256), and
wherein the rotating member (228, 258) is rotatably connected with the adsorption member (230, 260) via the second rotational shaft (236, 266).

5. The sheet connection device (100) as claimed in claim 3 or 4, wherein at least one of the first connection unit (150) or the second connection unit (160) further comprises a cutting member (268) for concurrently cutting the first sheet (114) and the second sheet (124).

6. The sheet connection device (100) as claimed in claim 5, wherein a cutting line of the first sheet (114) and a cutting line of the second sheet (124) are parallel to each other,
wherein the adsorption member (230) of the first connection unit (150) is configured to adsorb the first sheet (114) during a process in which the first sheet (114) is cut, and
wherein the adsorption member (260) of the second connection unit (160) is configured to adsorb the second sheet (124) during a process in which the second sheet (124) is cut.

7. The sheet connection device (100) as claimed in claim 5 or 6, wherein the adhesive member (274) of the second connection unit (160) connects a cut surface of the first sheet (114) with a cut surface of the second sheet (124).

8. A sheet connection method comprising:
performing a test run of winding a first sheet (114) waiting for a subsequent process moving from a first main roller (110) around a correction roller (172);
detecting, by a sensor (132), a position of the first sheet (114) moving from the first main roller (110) to the correction roller (172);
adjusting, by a controller (180), the position of the first sheet (114) in a sheet width direction while at least a portion of the first sheet (114) is being wound around the correction roller (172); and
connecting, by a connection unit (150, 160), the first sheet (114), whose position is adjusted, with a second sheet (124) being supplied from a second main roller (120) to the subsequent process.

9. The sheet connection method as claimed in claim 8, wherein the connection unit (150, 160) comprises a first connection unit (150) and a second connection unit (160) spaced apart from each other such that the first sheet (114) and the second sheet (124) are arranged therebetween and face each other, and
wherein the connecting the first sheet (114) with the second sheet (124) comprises:
adsorbing a portion of the first sheet (114) by an adsorption member (230) of the first connection unit (150), and
adsorbing a portion of the second sheet (124) by an adsorption member (260) of the second connection unit (160).

10. The sheet connection method as claimed in claim 9, further comprising:
contacting the portion of the first sheet (114) with the portion of the second sheet (124) by moving the adsorption member (230) of the first connection unit (150) and the adsorption member (260) of the second connection unit (160) closer to each other.

11. The sheet connection method as claimed in claim 9 or 10, wherein, in the connecting the first sheet (114) with the second sheet (124), the first sheet (114) and the second sheet (124) are concurrently cut by a cutting member (268) of the connection unit (150, 160), and
a cutting direction of the first sheet (114) and the second sheet (124) corresponds to a direction perpendicular to a contact surface between the first sheet (114) and the second sheet (124).

12. The sheet connection method as claimed in claim 11, wherein the connecting the first sheet (114) with the second sheet (124) is further comprising:
collecting, after the first sheet (114) and the second sheet (124) are cut out, a portion of the cut first sheet (114) that is connected to the correction roller (172) through the correction roller (172).

13. The sheet connection method as claimed in claim 12, wherein the connecting the first sheet (114) with the second sheet (124) is further comprising:
adsorbing a portion of the cut first sheet (114) and a portion of the cut second sheet (124) together by the adsorption member (230) of the first connection unit (150); and
connecting a cut surface of the first sheet (114) with a cut surface of the second sheet (124) by moving an adhesive member (274) of the second connection unit (160) towards the adsorption member (230) of the first connection unit (150).

14. The sheet connection method as claimed in any one of claims 8 to 13, wherein the first sheet (114) is supplied to the subsequent process after the first sheet (114) and the second sheet (124) are connected.

15. The sheet connection method as claimed in any one of claims 8 to 14, further comprising:
arranging a third sheet waiting for the subsequent process around the second main roller (120); and
connecting the third sheet, whose position is adjusted, with the first sheet (114) being supplied from the first main roller (110) to the subsequent process by the connection unit (150, 160).
